# EUROPEAN PATENT APPLICATION

(11) **EP 4 339 033 A1**
(43) Date of publication of application: **20.03.2024**
(21) Application number: 22806444.0
(22) Date of filing: 19.04.2022
(51) Int. Cl.: B60R 19/02, B60K 11/08, B60R 19/52

(54) **BUMPER ASSEMBLY AND VEHICLE**

(30) Priority: 13.05.2021 CN 202121028255 U
(71) Applicant: Beijing CHJ Information Technology Co., Ltd., Beijing 101399 (CN)
(72) Inventor: ZHU, Shuzhen, Beijing 101399 (CN)
(74) Representative: Maiwald GmbH
(86) International application number: PCT/CN2022/087777
(87) International publication number: WO 2022/237474

(57) **Abstract**

A bumper assembly. The bumper assembly comprises a bumper body (10), a blade (20), a heat dissipation device, and a driving device (40); the bumper body (10) is located in front of the heat dissipation device; an air inlet (31) is formed on the bumper body (10); the projection of the air inlet (31) in a front-back direction and the projection of the heat dissipation device in the front-back direction at least partially overlap; the blade (20) is rotatably provided at the air inlet (31); the driving device is connected to the blade (20) and is used for driving the blade (20) to rotate, so that the blade (20) has an open position and a closed position; at the open position, the blade (20) exposes the air inlet (31), and at the closed position, the blade (20) covers the air inlet (31); the projections of the blade (20) and the bumper body (10) in the front-back direction together cover the projection of the heat dissipation device in the front-back direction. The structure can avoid increase of the air resistance during travelling of the vehicle caused by air flowing to the heat dissipation device, and can avoid exposure of the internal structure of the vehicle, thereby improving the appearance of the vehicle to present a sense of technology. Also provided is a vehicle comprising the bumper assembly structure.

## Description

### CROSS-REFERENCE TO RELATED APPLICATION

This application is based on and claims priority of Chinese Patent Application No. 202121028255.0 filed on May 13, 2021, the entire contents of which are incorporated herein by reference.

### FIELD

The present disclosure relates to a field of vehicles, and in particular to a bumper assembly and a vehicle.

### BACKGROUND

In order to dissipate heat from a structure arranged in a front cabin of a vehicle, in the related art, an air inlet is formed in a bumper, and an air intake grille is usually arranged at the air inlet, so that wind can enter the front cabin of the vehicle through the air inlet to dissipate heat. Since the air inlet is always in an open state, when there is no heat dissipation demand in the front cabin of the vehicle, the wind will also flow into the front cabin of the vehicle through the air inlet, that is, in the case that there is no or less heat dissipation demand in the front cabin of the vehicle, the vehicle will still generate a large wind resistance during driving due to the wind flowing into the air inlet. In addition, in the related art, the air inlet is exposed outside the vehicle, which tends to expose an internal structure of the vehicle, and affects the sense of science and technology of an appearance of the vehicle.

### SUMMARY

An object of the present disclosure is to provide a bumper assembly and a vehicle, so as to solve the technical problems existing in the related art.

In order to achieve the above object, according to an aspect of the present disclosure, there is provided a bumper assembly. The bumper assembly includes a bumper body, a blade, a heat dissipation device and a driving device. The bumper body is located in front of the heat dissipation device, an air inlet is formed in the bumper body, a projection of the air inlet in a front-rear direction at least partially coincides with a projection of the heat dissipation device in the front-rear direction, the blade is rotatably arranged at the air inlet, and the driving device is connected to the blade and configured to drive the blade to rotate, so that the blade has an open position, in which the blade exposes the air inlet, and a closed position, in which the blade covers the air inlet, and projections of the blade and the bumper body in the front-rear direction jointly cover the projection of the heat dissipation device in the front-rear direction.

In some embodiments, the heat dissipation device includes a radiator, and the radiator is located behind the air inlet.

In some embodiments, the heat dissipation device includes an air intake grille located behind the air inlet, the air intake grille includes a vertical part and a transverse part extending from a lower end of the vertical part towards the bumper body, the vertical part and the transverse part form an L shape, a grille vent is formed in the vertical part, the projection of the air inlet in the front-rear direction at least partially coincides with a projection of the grille vent in the front-rear direction, and the bumper body is detachably connected to the transverse part.

In some embodiments, one of the transverse part and the bumper body includes an engaging groove, and the other one of the transverse part and the bumper body comprises an engaging block engaged with the engaging groove.

In some embodiments, a debris leakage hole is formed in the transverse part, and in the open position, a projection of the blade in an up-down direction at least partially coincides with a projection of the debris leakage hole in the up-down direction.

In some embodiments, the driving device includes a motor, a rotating shaft and a linkage mechanism, the motor is mounted on the heat dissipation device, an output shaft of the motor is connected with the rotating shaft and configured to drive the rotating shaft to rotate, the linkage mechanism is connected between the blade and the rotating shaft, and the linkage mechanism is configured to drive the blade to rotate when the rotating shaft rotates.

In some embodiments, the linkage mechanism includes a first connecting rod, a second connecting rod and a third connecting rod, the bumper assembly further includes a fixed bracket located between the heat dissipation device and the bumper body, a first end of the first connecting rod is connected to the rotating shaft in a circumferential locking manner, a second end of the first connecting rod extends upwards and is hinged with a first end of the second connecting rod, a second end of the second connecting rod extends upwards and is hinged with a first end of the third connecting rod, a second end of the third connecting rod extends towards the fixed bracket and is hinged with the fixed bracket, and the blade is mounted on the third connecting rod.

In some embodiments, the heat dissipation device includes a mounting block, a through hole is formed in the mounting block, the rotating shaft is rotatably inserted in the through hole, the first connecting rod includes a limiting protrusion, an arc-shaped limiting groove is formed in the rotating block, and the limiting protrusion is configured to move along the arc-shaped limiting groove. In the open position, the limiting protrusion is located at a first end of the arc-shaped limiting groove, and in the closed position, the limiting protrusion is located at a second end of the arc-shaped limiting groove.

In some embodiments, a gap is defined between the blade and a mouth wall of the air inlet.

According to another aspect of the present disclosure, there is provided a vehicle including the bumper assembly according to any one of the above embodiments.

Other features and advantages of the present disclosure will be described in detail in the detailed description that follows.

### BRIEF DESCRIPTION OF THE DRAWINGS

The accompanying drawings are used to provide a further understanding of the present disclosure and constitute a part of the specification, and together with the following detailed description, serve to explain the present disclosure, but do not constitute a limitation of the present disclosure. In the accompanying drawings:
Fig. 1 is a perspective view of a bumper assembly according to an illustrative embodiment of the present disclosure, in which a blade is in a closed position;
Fig. 2 is a perspective view of a bumper assembly according to an illustrative embodiment of the present disclosure, in which a blade is in an open position;
Fig. 3 is a top view of a bumper assembly according to an illustrative embodiment of the present disclosure;
Fig. 4 is a sectional view taken along line A-A in Fig. 3;
Fig. 5 is an exploded view of a bumper assembly according to an illustrative embodiment of the present disclosure;
Fig. 6 is a schematic view showing fit between an air intake grille and a driving device of a bumper assembly according to an illustrative embodiment of the present disclosure;
Fig. 7 is a perspective view of a driving device of a bumper assembly according to an illustrative embodiment of the present disclosure;
Fig. 8 is an assembly view of a rotating shaft and an air intake grille of a bumper assembly according to an illustrative embodiment of the present disclosure;
Fig. 9 is an enlarged view of part A in Fig. 8.

Description of reference numerals:
1-bumper assembly; 10-bumper body; 11-engaging block; 12-fixed wall; 13-first reinforcing plate; 14-second reinforcing plate; 20-blade; 30-air intake grille; 31-air inlet; 32-vertical part; 320-grille vent; 321-fixing lug; 33-transverse part; 330-debris leakage hole; 331-mounting block; 40-driving device; 41-motor; 42-rotating shaft; 43-linkage mechanism; 430-first connecting rod; 4301-limiting projection; 431-second connecting rod; 432-third connecting rod; 440-arc-shaped limiting groove; 50-fixed bracket; 60-gap.

### DETAILED DESCRIPTION

Embodiments of the present disclosure will be described below in detail with reference to the accompanying drawings. It should be understood that the embodiments described herein are used to explain and interpret the present disclosure, instead of limiting the present disclosure.

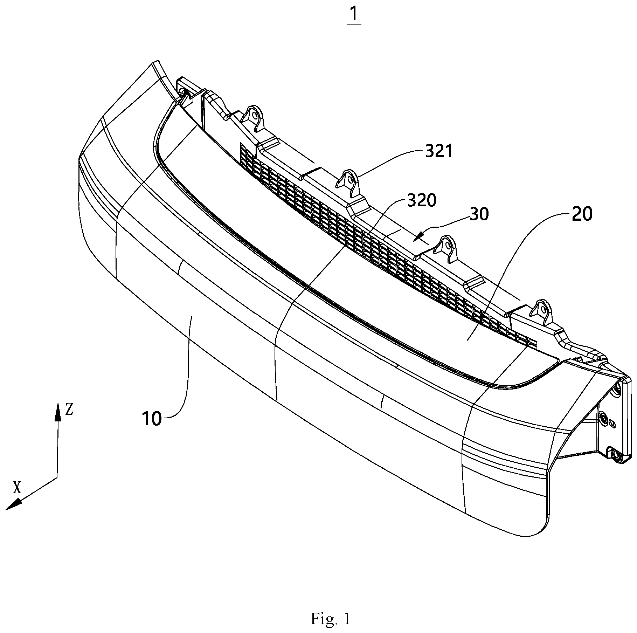

In the present disclosure, unless otherwise stated, the used orientation terms such as "front, rear, up and down" are usually defined based on a normal driving state of a vehicle. Specifically, as shown in Fig. 1, an X direction is a front-rear direction of the vehicle, in which a side pointed by an arrow is "front" and a converse side is "rear", and a Z direction is an up-down direction of the vehicle, in which a side pointed by an arrow is "up" and a converse side is "down". "Inside and outside" refer to the inside and outside of an outline of a corresponding structure or component.

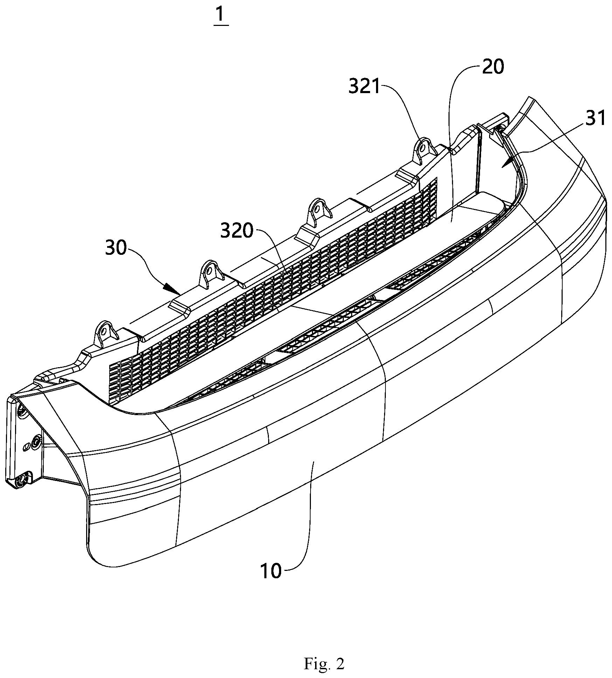

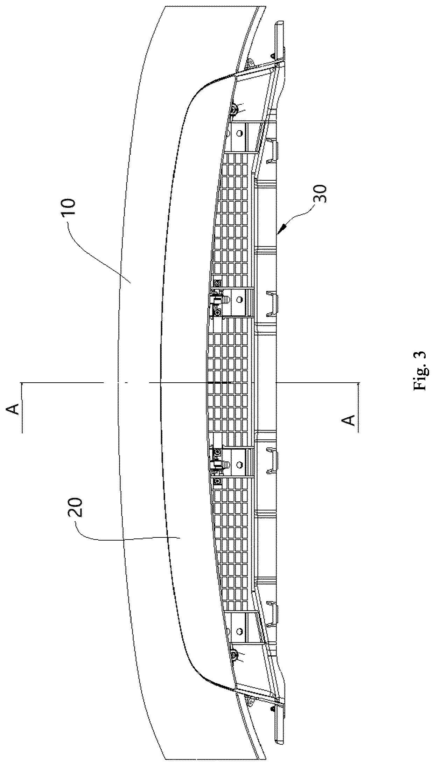

Referring to Figs. 1-9, according to an aspect of the present disclosure, a bumper assembly 1 is provided, and the bumper assembly 1 includes a bumper body 10, a blade 20, a heat dissipation device and a driving device 40. The bumper body 10 is located in front of the heat dissipation device, the bumper body 10 has an air inlet 31, a projection of the air inlet 31 in the front-rear direction at least partially coincides with a projection of the heat dissipation device in the front-rear direction, and the blade 20 is rotatably arranged at the air inlet 31. The driving device 40 is connected to the blade 20 and is configured to drive the blade 20 to rotate, so that the blade 20 has an open position, in which the blade 20 exposes the air inlet 31, and a closed position, in which the blade 20 covers the air inlet 31. Projections of the blade 20 and the bumper body 10 in the front-rear direction jointly cover the projection of the heat dissipation device in the front-rear direction.

According to the above technical solution, the air inlet 31 is formed in the bumper body 10, and the heat dissipation device is located behind the bumper body 10. When the heat dissipation device needs to dissipate heat, the blade 20 may be in the open position, so that the wind can flow through the air inlet 31 to the heat dissipation device to dissipate heat. When the heat dissipation device does not need to dissipate heat, the blade 20 may be in the closed position, and the blade 20 together with the bumper body 10 plays a shielding role for the heat dissipation device arranged behind the bumper body 10, so as to avoid the increase of the wind resistance during the driving of the vehicle caused by the wind flowing to the heat dissipation device. In addition, when the blade 20 is in the closed position, an internal structure of the vehicle can be prevented from being directly exposed, and the sense of science and technology of an appearance of the vehicle can be improved.

The air inlet 31 may be formed at any suitable position on the bumper body 10. In an embodiment according to the present disclosure, as shown in Figs. 1-5, the heat dissipation device includes a radiator located behind the air inlet 31, so that the wind can directly flow backward to the radiator to dissipate heat of the radiator after passing through the air inlet 31, thus reducing the loss of the wind flowing into the air inlet 31 and improving the heat dissipation effect. Here, the radiator may be, for example, a condenser of a vehicle air conditioning system, and the condenser is arranged behind the air inlet 31. During the driving of the vehicle, the wind flows to an outer surface of the condenser through the air inlet 31, thus playing a role in cooling the condenser and dissipating heat of the condenser.

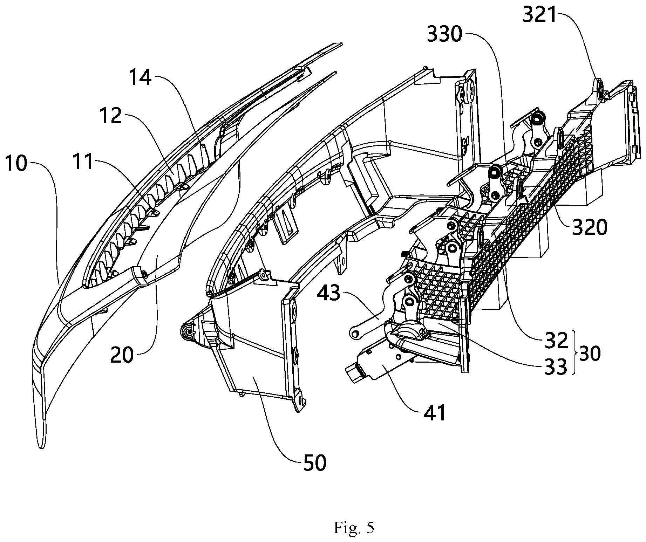

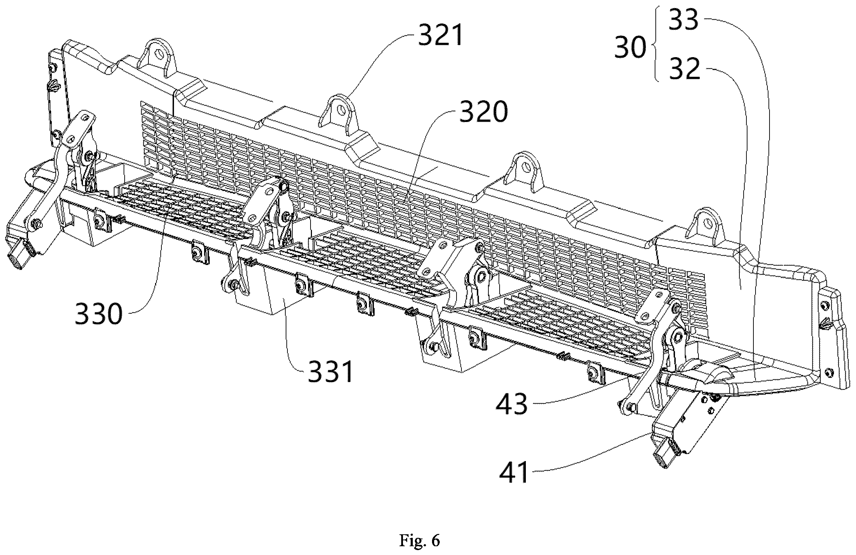

In some embodiments, as shown in Figs. 5 and 6, the heat dissipation device includes an air intake grille 30 located behind the air inlet 31. The air intake grille 30 may include a vertical part 32 and a transverse part 33 extending from a lower end of the vertical part 32 toward the bumper body 10. The vertical part 32 and the transverse part 33 form an L shape, and a grille vent 320 is formed in the vertical part 32. The projection of the air inlet 31 in the front-rear direction at least partially coincides with a projection of the grille vent 320 in the front-rear direction, and the bumper body 10 is detachably connected to the transverse part 33. The grille vent 320 in the vertical part 32 may play a role of ventilation, and the transverse part 33 may play a role of connection with the bumper body 10.

For the embodiment where the heat dissipation device includes the air intake grille 30 and the radiator, the air intake grille 30 is located in front of the radiator. In addition, the air intake grille 30 may be a heat dissipation grille with a filtering function (for example, a filter screen is arranged on the air intake grille), so that when the blade 20 is opened, the air intake grille 30 may also play a role of filtering and blocking sand and stones, thus preventing the sand and stones from damaging the radiator located behind the air intake grille 30.

The vertical part 32 and the transverse part 33 may be integrally formed and manufactured. On the one hand, the vertical part 32 and the transverse part 33 have great stability and integrity therebetween, and there are no problems of loose fitting or easy loosening. On the other hand, it is also convenient for the production and manufacturing of the air intake grille 30. For example, the air intake grille 30 may be injection-molded at one time through a mold.

As shown in Figs. 1-6 and 8, in order to fix the air intake grille 30 conveniently, the vertical part 32 may further include a plurality of fixing lugs 321, the fixing lug 321 has a fixing hole, and a bolt is inserted in the fixing hole. The air intake grille 30 is fixed to a headlight mounting bracket of the vehicle by the bolt.

In order to realize the detachable connection between the bumper body 10 and the transverse part 33, in an embodiment according to this solution, one of the transverse part 33 and the bumper body 10 includes an engaging groove, and the other one of the transverse part 33 and the bumper body 10 includes an engaging block 11 which is engaged with the engaging groove. The bumper body 10 and the transverse part 33 are detachably connected by engagement, so that the structure is simple, and users can mount and detach the bumper body 10 by themselves without tools. In other embodiments, the bumper body 10 may also be detachably mounted on the transverse part 33 of the air intake grille 30 by bolts.

In some embodiments, the air inlet 31 may be formed by a downward depression of an upper edge of the bumper body 10. In the embodiment where the air inlet 31 is formed at the upper edge of the bumper body 10, as shown in Figs. 1- 3, there is a certain gap between the blade 20 and the air intake grille 30, which is used for arranging a front grille lamp, and the front grille lamp covers a gap between the blade 20 and the heat dissipation device.

In other embodiments according to the present disclosure, the air inlet 31 may also be arranged at a left or right edge of the bumper body 10, so long as the heat dissipation effect of the vehicle can be improved. The present disclosure does not limit the specific position of the air inlet 31.

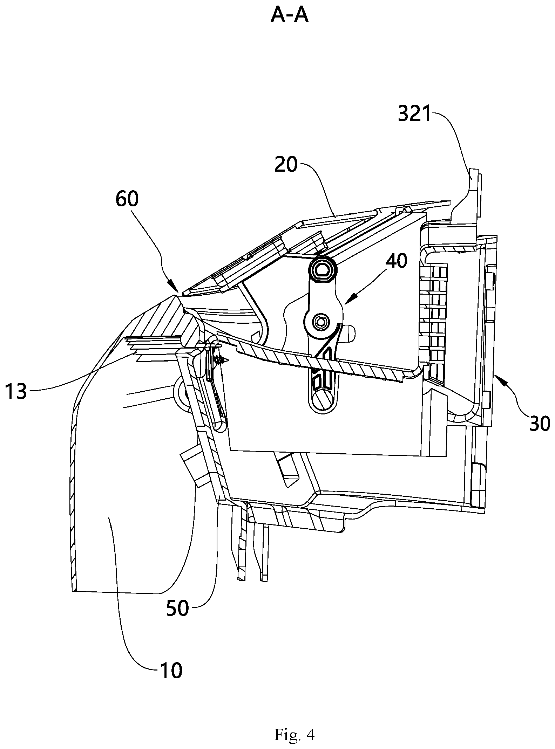

In the present disclosure, as shown in Fig. 4, in order to enhance the strength of the bumper body 10, a fixed wall 12 extending downwards is formed at an inner side wall of the bumper body 10. In a length direction of the bumper body 10, a plurality of first reinforcing plates 13 are arranged on a side of the fixed wall 12 close to the bumper body 10. As shown in Fig. 5, a plurality of second reinforcing plates 14 are arranged on a side of the fixed wall 12 away from from the bumper body 10 to increase the strength of the fixed wall 12. In the embodiment where the bumper body 10 includes the engaging block 11, the engaging block 11 may be arranged on the fixed wall 12.

In some embodiments, as shown in Fig. 6, a debris leakage hole 330 is formed in the transverse part 33, and in the open position, a projection of the blade 20 in the up-down direction at least partially coincides with a projection of the debris leakage hole 330 in the up-down direction.

On the one hand, the debris leakage hole 330 may allow sundries such as debris deposited or dropped between the bumper and the air intake grille 30 to leak downward from the debris leakage hole 330, so as to prevent the sundries from blocking the air intake grille 30 and affecting the heat dissipation effect on the vehicle. On the other hand, when the blade 20 is in the open position, the projection of the blade 20 in the up-down direction partially coincides with the projection of the debris leakage hole 330 in the up-down direction, that is, the blade 20 can cover at least a part of the debris leakage hole 330. In this way, in the process of the air flow entering the air intake grille 30 from the air inlet 31, the blade 20 covered on the debris leakage hole 330 can prevent the air flow from flowing to the debris leakage hole 330 and flowing away through the debris leakage hole 330 as much as possible, thus ensuring the air intake of the grille vent 320.

In an embodiment according to the present disclosure, the driving mechanism may include a motor 41 and a rotating shaft 42. An output shaft of the motor 41 is connected with the rotating shaft 42 and configured to drive the rotating shaft 42 to rotate, and an end of the blade 20 is fixedly connected with the rotating shaft 42. When the motor 41 rotates, the output shaft of the motor 41 drives the rotating shaft 42 to rotate, and the rotating shaft 42 drives the blade 20 to rotate, thus covering or exposing the air inlet 31.

In another embodiment according to the present disclosure, as shown in Figs. 5-7, the driving device 40 includes a motor 41, a rotating shaft 42 and a linkage mechanism 43. The motor 41 is mounted on the heat dissipation device, and an output shaft of the motor 41 is connected with the rotating shaft 42 and configured to drive the rotating shaft 42 to rotate. The linkage mechanism 43 is connected between the blade 20 and the rotating shaft 42, and the linkage mechanism 43 is configured to drive the blade 20 to rotate when the rotating shaft 42 rotates. When the motor 41 rotates, the output shaft of the motor 41 drives the rotating shaft 42 to rotate, and the rotating shaft 42 drives the linkage mechanism 43 connected to the rotating shaft 42 to move, so as to drive the blade 20 connected to the linkage mechanism 43 to rotate, thus exposing or covering the air inlet 31.

In the embodiment where the heat dissipation device includes the air intake grille 30 located behind the air intake 31, the motor 41 may be mounted on the air intake grille 30.

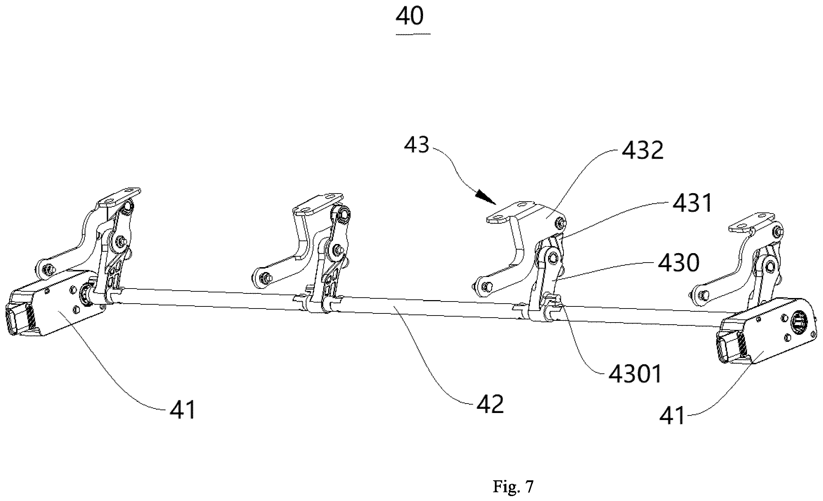

In some embodiments, as shown in Fig. 7, the linkage mechanism 43 may include a first connecting rod 430, a second connecting rod 431 and a third connecting rod 432. In Figs. 4, 5 and 8, the bumper assembly 1 further includes a fixed bracket 50 located between the heat dissipation device and the bumper body 10. A first end of the first connecting rod 430 is connected to the rotating shaft 42 in a circumferential locking manner, and a second end of the first connecting rod 430 extends upward and is hinged with a first end of the second connecting rod 431. A second end of the second connecting rod 431 extends upward and is hinged with a first end of the third connecting rod 432, and a second end of the third connecting rod 432 extends toward the fixed bracket 50 and is hinged with the fixed bracket 50. The blade 20 is mounted on the third connecting rod 432. When the air inlet 31 needs to be exposed, the motor 41 rotates to drive the rotating shaft 42 to rotate, and the rotating shaft 42 drives the first connecting rod 430 to rotate. At this time, with the rotation of the rotating shaft 42, the second end of the first connecting rod 430 moves away from the bumper body 10, and at the same time, drives the second connecting rod 431 to move away from the bumper body 10. The second end of the second connecting rod 431 drives the first end of the third connecting rod 432 to move away from the bumper body 10. Since the second end of the third connecting rod 432 is hinged with the fixed bracket 50, the third connecting rod 432 rotates downwards around the second end of the third connecting rod 432 under the pull of the second connecting rod 431, and during the rotation of the third connecting rod 432, the blade 20 mounted on the third connecting rod 432 rotates along with the third connecting rod 432 until the blade 20 reaches the open position, thus exposing the air inlet 31.

When the air inlet 31 needs to be covered, the motor 41 rotates to drive the rotating shaft 42 to rotate, and the rotating shaft 42 drives the first connecting rod 430 to rotate. At this time, with the rotation of the rotating shaft 42, the second end of the first connecting rod 430 moves towards the bumper body 10, and at the same time, pushes the second connecting rod 431 to move toward the bumper body 10. The second end of the second connecting rod 431 pushes the first end of the third connecting rod 432 to move toward the bumper body 10. Since the second end of the third connecting rod 432 is hinged with the fixed bracket 50, the third connecting rod 432 rotates upwards around the second end of the third connecting rod 432 under the push of the second connecting rod 431, and during the rotation of the third connecting rod 432, the blade 20 mounted on the third connecting rod 432 rotates along with the third connecting rod 432 until the blade 20 reaches the closed position, thus covering the air inlet 31.

In some embodiments, as shown in Figs. 6-7, two motors 41 may be provided, and one motor 41 is arranged at either end of the rotating shaft 42, so that the two motors 41 drive the rotating shaft 42 from two sides of the rotating shaft 42 at the same time, which improves the stability of the blade 20 during rotation. In addition, a through hole may be formed in the fixed bracket 50, and a part of the motor 41 provided with a power connector may pass through the through hole, so as to facilitate a power supply system to connect with the motor 42 through a wire.

In some embodiments, in the present disclosure, an included angle between the open position and the closed position of the blade 20 is 90°, and a rotation angle of the blade 20 (based on a position where the blade 20 is in the closed position) may be adjusted between 40° to 90° according to the heat dissipation demand of the vehicle. In the above angle range, the greater the angle, the greater the exposure of the air inlet 31, the higher the air intake efficiency, and the higher the heat dissipation efficiency.

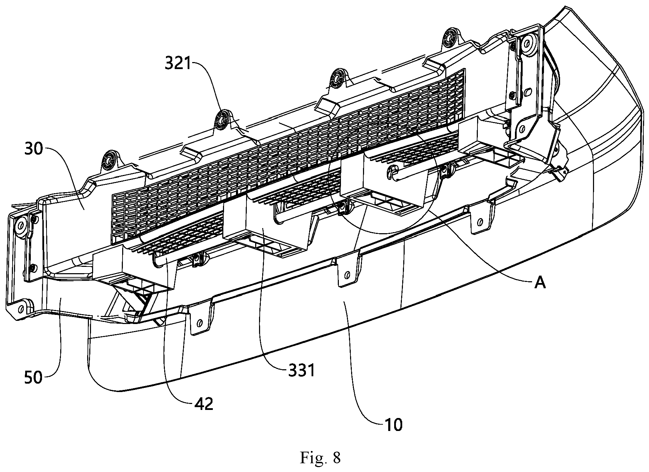

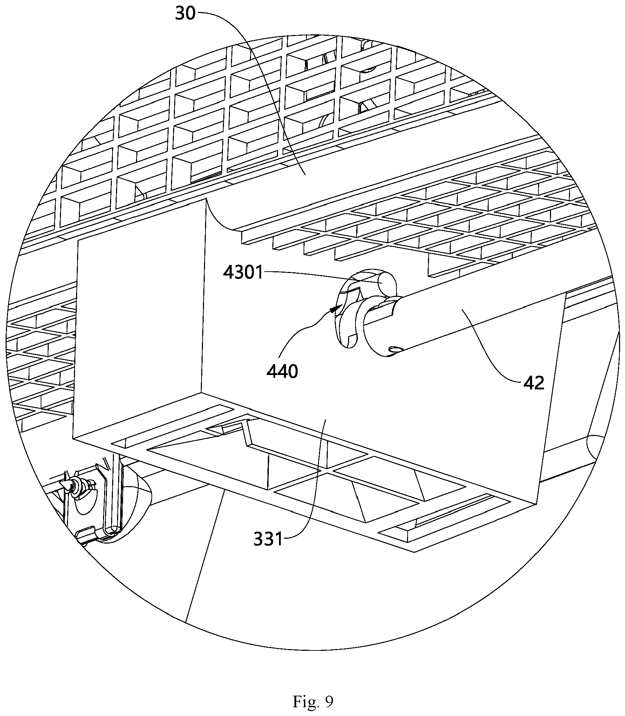

In some embodiments, as shown in Figs. 8 and 9, a mounting block 331 may be arranged on the heat dissipation device, a through hole is formed in the mounting block 331, and the rotating shaft 42 is rotatably inserted in the through hole. The first connecting rod 430 includes a limiting protrusion 4301, and an arc-shaped limiting groove 440 is formed in the rotating block. The limiting protrusion 4301 can move along the arc-shaped limiting groove 440. In the open position, the limiting protrusion 4301 is located at a first end of the arc-shaped limiting groove 440, and in the closed position, the limiting protrusion 4301 is located at a second end of the arc-shaped limiting groove 440. In the embodiment where the heat dissipation device includes the air intake grille 30 located behind the air intake 31, the mounting block 331 may be arranged on the transverse part 33 of the air intake grille 30.

When the motor 41 drives the blade 20 to rotate, the first connecting rod 430 moves in the arc-shaped limiting groove 440, and the arc-shaped limiting groove 440 may limit and guide the movement of the first connecting rod 430, so as to limit the movement or rotation of the second connecting rod 431 and the third connecting rod 432, thus making the blade 20 more accurate and stable during rotation.

In some embodiments, as shown in Fig. 4, there may be a gap 60 between the blade 20 and a mouth wall of the air inlet 31. In this way, when the driving device 40 drives the blade 20 to open or close, the gap 60 may provide a rotating space for the blade 20 and avoid the interference between the blade 20 and the mouth wall of the air inlet 31.

In an embodiment according to the present disclosure, a size of the gap 60 between the blade 20 and the mouth wall of the air inlet 31 may be 3mm.

According to another aspect of the present disclosure, there is provided a vehicle including the bumper assembly 1 as described above. This vehicle has all the beneficial effects of the bumper assembly 1, which will not be repeated here in the present disclosure.

According to the above technical solution, since the air inlet is formed in the bumper body and the heat dissipation device is located behind the bumper body, when the heat dissipation device needs to dissipate heat, the blade may be in the open position, so that the wind can flow through the air inlet to the heat dissipation device to dissipate heat, and when the heat dissipation device does not need to dissipate heat, the blade may be in the closed position, and the blade together with the bumper body plays a shielding role for the heat dissipation device arranged behind the bumper body, so as to avoid the increase of the wind resistance during the driving of the vehicle caused by the wind flowing to the heat dissipation device. In addition, when the blade is in the closed position, an internal structure of the vehicle can be prevented from being directly exposed, and the sense of science and technology of an appearance of the vehicle can be improved.

The preferred embodiments of the present disclosure have been described in detail with reference to the accompanying drawings, but the present disclosure is not limited to the specific details in the above embodiments. Within the scope of the technical concept of the present disclosure, various simple modifications can be made to the technical solution of the present disclosure, and these simple modifications all belong to the protection scope of the present disclosure.

In addition, it should be noted that the specific technical features described in the above specific embodiments can be combined in any suitable way without contradiction, and in order to avoid unnecessary repetition, various possible combinations are not explained in the present disclosure.

Moreover, various embodiments of the present disclosure can also be arbitrarily combined, which should also be regarded as the contents disclosed in the present disclosure, as long as not violating the idea of the present disclosure.

## Claims

1. A bumper assembly, comprising a bumper body (10), a blade (20), a heat dissipation device and a driving device (40), wherein the bumper body (10) is located in front of the heat dissipation device, an air inlet (31) is formed in the bumper body (10), a projection of the air inlet (31) in a front-rear direction at least partially coincides with a projection of the heat dissipation device in the front-rear direction, the blade (20) is rotatably arranged at the air inlet (31), and the driving device (40) is connected to the blade (20) and configured to drive the blade (20) to rotate, so that the blade (20) has an open position, in which the blade (20) exposes the air inlet (31), and a closed position, in which the blade (20) covers the air inlet (31), and projections of the blade (20) and the bumper body (10) in the front-rear direction jointly cover the projection of the heat dissipation device in the front-rear direction.

2. The bumper assembly according to claim 1, wherein the heat dissipation device comprises a radiator, and the radiator is located behind the air inlet (31).

3. The bumper assembly according to claim 1 or 2, wherein the heat dissipation device comprises an air intake grille (30) located behind the air inlet (31), the air intake grille (30) comprises a vertical part (32) and a transverse part (33) extending from a lower end of the vertical part (32) towards the bumper body (10), the vertical part (32) and the transverse part (33) form an L shape, a grille vent (320) is formed in the vertical part (32), the projection of the air inlet (31) in the front-rear direction at least partially coincides with a projection of the grille vent (320) in the front-rear direction, and the bumper body (10) is detachably connected to the transverse part (33).

4. The bumper assembly according to claim 3, wherein one of the transverse part (33) and the bumper body (10) comprises an engaging groove, and the other one of the transverse part (33) and the bumper body (10) comprises an engaging block (11) engaged with the engaging groove.

5. The bumper assembly according to claim 3 or 4, wherein a debris leakage hole (330) is formed in the transverse part (33), and in the open position, a projection of the blade (20) in an up-down direction at least partially coincides with a projection of the debris leakage hole (330) in the up-down direction.

6. The bumper assembly according to any one of claims 1-5, wherein the driving device (40) comprises a motor (41), a rotating shaft (42) and a linkage mechanism (43), the motor (41) is mounted on the heat dissipation device, an output shaft of the motor (41) is connected with the rotating shaft (42) and configured to drive the rotating shaft (42) to rotate, the linkage mechanism (43) is connected between the blade (20) and the rotating shaft (42), and the linkage mechanism (43) is configured to drive the blade (20) to rotate when the rotating shaft (42) rotates.

7. The bumper assembly according to claim 6, wherein the linkage mechanism (43) comprises a first connecting rod (430), a second connecting rod (431) and a third connecting rod (432), the bumper assembly (1) further comprises a fixed bracket (50) located between the heat dissipation device and the bumper body (10), a first end of the first connecting rod (430) is connected to the rotating shaft (42) in a circumferential locking manner, a second end of the first connecting rod (430) extends upwards and is hinged with a first end of the second connecting rod (431), a second end of the second connecting rod (431) extends upwards and is hinged with a first end of the third connecting rod (432), a second end of the third connecting rod (432) extends towards the fixed bracket (50) and is hinged with the fixed bracket (50), and the blade (20) is mounted on the third connecting rod (432).

8. The bumper assembly according to claim 7, wherein the heat dissipation device comprises a mounting block (331), a through hole is formed in the mounting block (331), the rotating shaft (42) is rotatably inserted in the through hole, the first connecting rod (430) comprises a limiting protrusion (4301), an arc-shaped limiting groove (440) is formed in the rotating block, and the limiting protrusion (4301) is configured to move along the arc-shaped limiting groove (440), wherein in the open position, the limiting protrusion (4301) is located at a first end of the arc-shaped limiting groove (440), and in the closed position, the limiting protrusion (4301) is located at a second end of the arc-shaped limiting groove (440).

9. The bumper assembly according to any one of claims 1-8, wherein a gap (60) is defined between the blade (20) and a mouth wall of the air inlet (31).

10. A vehicle, comprising a bumper assembly (1) according to any one of claims 1-9.
